# EUROPEAN PATENT APPLICATION

(11) **EP 4 811 506 A1**
(43) Date of publication of application: **23.09.2026**
(21) Application number: 26195828.4
(22) Date of filing: 31.07.2026
(51) Int. Cl.: H01M 50/124, H01M 10/04, H01M 10/0587, H01M 50/107, H01M 50/131, H01M 50/133

(54) **CYLINDRICAL BATTERY, PREPARATION METHOD THEREOF, AND ELECTRONIC DEVICE**

(30) Priority: 31.07.2025 CN 202511066387
(71) Applicant: Xiamen Ampace Technology Limited, Xiamen City, Fujian Province 361000 (CN)
(72) Inventor: LIU, Zhen, Xiamen City, Fujian Province, 361000 (CN)
(74) Representative: Kraus & Lederer PartGmbB

(57) **Abstract**

This application provides a cylindrical battery, a preparation method thereof, and an electronic device. The cylindrical battery includes a housing, an electrode assembly, and an electrolyte. The housing includes a side wall. The electrode assembly and the electrolyte are accommodated in an accommodating cavity defined by the housing. A dyne value of an inner surface of the side wall facing the electrode assembly is greater than or equal to 40 dyn/cm. A contact angle θ between the electrolyte and the inner surface ranges from 0° to 19°.

## Description

### TECHNICAL FIELD

This application relates to the field of electrochemical technologies, and in particular, to a cylindrical battery, a preparation method thereof, and an electronic device.

### BACKGROUND

Cylindrical batteries are widely used in electric tools, two-wheeled vehicles, robots, and other fields due to their features such as high energy densities and convenience. However, an inner surface of a side wall of a housing of a cylindrical battery is prone to be corroded due to contact with by-products such as hydrofluoric acid in the battery, which restricts application of the cylindrical battery. Therefore, how to mitigate a problem of corrosion on an inner surface of a side wall of a housing of a cylindrical battery has become an urgent technical problem to be solved.

### SUMMARY

An objective of this application is to provide a cylindrical battery, a preparation method thereof, and an electronic device, thereby mitigating a problem of corrosion on an inner surface of a side wall of a housing of the cylindrical battery.

It should be noted that, in "SUMMARY" of this application, a lithium-ion battery is used as an example of the cylindrical battery to explain this application, but the cylindrical battery of this application is not limited to the lithium-ion battery. Specific technical solutions are as follows:

A first aspect of this application provides a cylindrical battery, including:
a housing, including a side wall;
an electrode assembly, accommodated in an accommodating cavity defined by the housing; and
an electrolyte, accommodated in the accommodating cavity;
where a dyne value of an inner surface of the side wall facing the electrode assembly is greater than or equal to 40 dyn/cm, and a contact angle θ between the electrolyte and the inner surface ranges from 0° to 19°. In some embodiments of this application, the dyne value of the inner surface ranges from 40 dyn/cm to 55 dyn/cm. In some embodiments of this application, 0°≤θ≤15°. In some embodiments of this application, 4.5°≤θ≤15°. By regulating the dyne value of the inner surface and the contact angle between the electrolyte and the inner surface within the above ranges, the electrolyte is facilitated to wet the inner surface of the side wall of the housing, and a liquid film is formed on the inner surface, thereby mitigating a problem that by-products in the cylindrical battery corrode the inner surface of the side wall of the housing due to direct contact with the inner surface.

In some embodiments of this application, in a plane perpendicular to a winding axis of the electrode assembly, a cross-sectional area of the accommodating cavity is S1, and a cross-sectional area of the electrode assembly is S2, where 0.96≤S1/S2≤0.98. A value of S1/S2 is within the above range, the electrode assembly substantially fills the accommodating cavity of the housing, and a liquid film formed by the electrolyte on the inner surface is relatively complete, so that the obtained cylindrical battery has a relatively high energy density while mitigating a problem of corrosion on the inner surface of the side wall of the housing.

In some embodiments of this application, at 25°C, a viscosity η of the electrolyte ranges from 2 mPa·s to 5 mPa·s, which is conducive to forming a relatively complete liquid film of the electrolyte on the inner surface of the side wall and mitigating a problem of corrosion on the inner surface of the side wall.

In some embodiments of this application, a roughness Ra of the inner surface ranges from 0.5 µm to 2.4 µm. The roughness Ra of the inner surface is within the above range, so that the electrolyte is facilitated to wet the inner surface of the side wall of the housing, and a liquid film is formed on the inner surface, thereby mitigating a problem that by-products in the cylindrical battery corrode the inner surface of the side wall of the housing due to direct contact with the inner surface.

In some embodiments of this application, the inner surface is provided with a plurality of pores, a pore diameter d of a single pore ranges from 1 µm to 5 µm, and a depth h thereof ranges from 5 µm to 20 µm. By regulating the pore diameter and depth of the single pore within the above ranges, the electrolyte has a certain capillary action on the inner surface of the side wall of the housing, which is conducive to forming a liquid film of the electrolyte on the inner surface of the side wall of the housing, thereby mitigating a problem that by-products in the cylindrical battery corrode the inner surface of the side wall of the housing due to direct contact with the inner surface.

In some embodiments of this application, a density of the pores is N, and the cylindrical battery satisfies one of the following features:
(1) 5000 pcs/mm²≤N≤20000 pcs/mm², 1 µm≤d≤2 µm, and 5 µm≤h<10 µm;
(2) 5000 pcs/mm²<N≤15000 pcs/mm², 2 µm<d≤3 µm, and 10 µm≤h≤15 µm; or
(3) 5000 pcs/mm²<N≤10000 pcs/mm², 3 µm<d≤5 µm, and 15 µm<h≤20 µm.

The cylindrical battery satisfies one of the above features, the density, diameter, and depth of the pore match each other, which is conducive to better forming a liquid film of the electrolyte on the inner surface of the side wall of the housing, thereby further mitigating a problem that by-products in the cylindrical battery corrode the inner surface of the side wall of the housing due to direct contact with the inner surface.

In some embodiments of this application, a diameter D of the cylindrical battery ranges from 17 mm to 65 mm. When the diameter is within the above range, the cylindrical battery is applicable to a wide range of scenarios.

In some embodiments of this application, the housing includes a substrate layer and a primer layer. An overall thickness of the obtained housing is relatively small, which is conducive to taking into account a volumetric energy density or gravimetric energy density of the cylindrical battery.

In some embodiments of this application, the housing includes a substrate layer, a primer layer, and a functional layer, the primer layer is located between the substrate layer and the functional layer, the functional layer faces the electrode assembly, and a thickness H of the functional layer ranges from 1 nm to 100 nm. In some embodiments of this application, 10 nm≤H≤50 nm. The functional layer includes a functional material. The functional material includes at least one of aluminum oxide, titanium dioxide, zinc oxide, titanium nitride, lithium fluoride or titanium trioxide. The functional layer includes the above functional material, and the thickness of the functional layer is within the above range, so that the functional layer is less prone to react with by-products in the cylindrical battery. This can mitigate a problem that the by-products in the cylindrical battery corrode the housing due to direct contact with the primer layer and the substrate layer of the housing.

In some embodiments of this application, the functional layer is a single layer, so that a preparation method thereof is simple, and a problem that by-products in the cylindrical battery corrode the housing due to direct contact with the primer layer and the substrate layer of the housing can be mitigated.

In some embodiments of this application, the functional layer includes a first material layer and a second material layer, the first material layer includes a first functional material, the second material layer includes a second functional material, and a mass ratio of the first functional material to the second functional material is (0.2 to 5):1; and the first functional material and the second functional material each independently include at least one of aluminum oxide, titanium dioxide, zinc oxide, titanium nitride, lithium fluoride or titanium trioxide. The functional layer includes the first material layer and the second material layer, and the mass ratio and types of the first functional material and the second functional material are regulated within the above ranges, so that the obtained functional layer is less prone to react with by-products in the cylindrical battery, and a problem that the by-products in the cylindrical battery corrode the housing due to direct contact with the primer layer and the substrate layer of the housing can be mitigated.

In some embodiments of this application, a thickness H1 of the substrate layer ranges from 100 µm to 1000 µm, and a material of the substrate layer includes at least one of steel, aluminum, or aluminum alloy; and a thickness H2 of the primer layer ranges from 1 µm to 10 µm, and a material of the primer layer includes at least one of nickel, nickel alloy, or inorganic ceramic particles. The material and thickness of the substrate layer are within the above ranges, so that the obtained housing has good structural stability. Regulating the thickness of the primer layer within the above range can protect the substrate layer on the one hand, and enable the obtained housing to have an appropriate overall thickness on the other hand, which is conducive to taking into account the energy density of the cylindrical battery.

A second aspect of this application provides a preparation method of the cylindrical battery according to any of the foregoing embodiments, including the following steps: performing functionalization treatment on a substrate housing to obtain the housing, where the functionalization treatment includes one of plasma activation, laser etching, or atomic layer deposition. A dyne value of an inner surface of a side wall of the obtained housing is greater than or equal to 40 dyn/cm, and a contact angle between the electrolyte and the inner surface ranges from 0° to 19°, so that the electrolyte is facilitated to wet the inner surface of the side wall of the housing, and a liquid film is formed on the inner surface, thereby mitigating a problem that by-products in the cylindrical battery corrode the inner surface of the side wall of the housing due to direct contact with the inner surface.

In some embodiments of this application, the functionalization treatment is the plasma activation, an atmosphere of the plasma activation is a mixed gas of an inert gas and a reactive gas, and a volume ratio of the inert gas to the reactive gas is (1 to 4):1, where the inert gas includes at least one of argon or helium, and the reactive gas includes at least one of oxygen, hydrogen, or nitrogen. By adopting the above atmosphere of the plasma activation and regulating the volume ratio of the inert gas to the reactive gas within the above range, the electrolyte is facilitated to wet the inner surface of the side wall of the housing, and a liquid film is formed on the inner surface, thereby mitigating a problem that by-products in the cylindrical battery corrode the inner surface of the side wall of the housing due to direct contact with the inner surface.

A third aspect of this application provides an electronic device, including the cylindrical battery according to any of the foregoing embodiments or the cylindrical battery prepared according to the preparation method according to any of the foregoing embodiments.

Beneficial Effects of this application are as follows:
This application provides a cylindrical battery, a preparation method thereof, and an electronic device. The cylindrical battery includes a housing, an electrode assembly, and an electrolyte. The housing includes a side wall. The electrode assembly and the electrolyte are accommodated in an accommodating cavity defined by the housing. A dyne value of an inner surface of the side wall facing the electrode assembly is greater than or equal to 40 dyn/cm. A contact angle θ between the electrolyte and the inner surface ranges from 0° to 19°. By regulating the dyne value of the inner surface and the contact angle between the electrolyte and the inner surface within the above ranges, the electrolyte is facilitated to wet the inner surface of the side wall of the housing, and a liquid film is formed on the inner surface, thereby mitigating a problem that by-products in the cylindrical battery corrode the inner surface of the side wall of the housing due to direct contact with the inner surface.

Certainly, implementing any product or method of this application does not necessarily require simultaneous achievement of all the advantages described above.

### DETAILED DESCRIPTION

Technical solutions in this application are clearly and completely described below. Obviously, the described embodiments are merely some but not all the embodiments of this application. All other embodiments obtained by those skilled in the art based on this application fall within the protection scope of this application.

It should be noted that, in specific embodiments of this application, a lithium-ion battery is used as an example of the cylindrical battery to explain this application, but the cylindrical battery of this application is not limited to the lithium-ion battery. Specific technical solutions are as follows:

A first aspect of this application provides a cylindrical battery, including a housing, an electrode assembly, and an electrolyte. The housing includes a side wall. The electrode assembly and the electrolyte are accommodated in an accommodating cavity defined by the housing. A dyne value of an inner surface of the side wall facing the electrode assembly is greater than or equal to 40 dyn/cm. In some embodiments of this application, the dyne value of the inner surface ranges from 40 dyn/cm to 55 dyn/cm. For example, the dyne value of the inner surface may be 40 dyn/cm, 41 dyn/cm, 42 dyn/cm, 43 dyn/cm, 44 dyn/cm, 45 dyn/cm, 46 dyn/cm, 47 dyn/cm, 48 dyn/cm, 49 dyn/cm, 50 dyn/cm, 51 dyn/cm, 52 dyn/cm, 53 dyn/cm, 54 dyn/cm, 55 dyn/cm, or a range defined by any two values therebetween. In some embodiments of this application, a contact angle θ between the electrolyte and the inner surface ranges from 0° to 19°. In some embodiments of this application, 0°≤θ≤15°. In some embodiments of this application, 4.5°≤θ≤15°. For example, the contact angle θ between the electrolyte and the inner surface may be 0°, 1°, 2°, 3°, 4°, 4.5°, 5°, 6°, 7°, 8°, 9°, 10°, 11°, 12°, 13°, 14°, 15°, 16°, 17°, 18°, 19°, or a range defined by any two values therebetween. When the dyne value of the inner surface is too small, for example, less than 40 dyn/cm, or the contact angle between the electrolyte and the inner surface is too large, for example, greater than 19°, the electrolyte is less prone to adhere to the inner surface of the side wall of the housing, and by-products such as hydrofluoric acid in the cylindrical battery are prone to corrode the inner surface of the side wall of the housing due to direct contact with the housing. By regulating the dyne value of the inner surface and the contact angle between the electrolyte and the inner surface within the above ranges, the electrolyte is facilitated to wet the inner surface of the side wall of the housing, and a liquid film is formed on the inner surface, thereby mitigating a problem that the by-products in the cylindrical battery corrode the inner surface of the side wall of the housing due to direct contact with the inner surface.

In some embodiments of this application, in a plane perpendicular to a winding axis of the electrode assembly, a cross-sectional area of the accommodating cavity is S1, and a cross-sectional area of the electrode assembly is S2, where 0.96≤S1/S2≤0.98. For example, S1/S2 may be 0.96, 0.97, 0.98, or a range defined by any two values therebetween. A value of S1/S2 is within the above range, the electrode assembly substantially fills the accommodating cavity of the housing, and a liquid film formed by the electrolyte on the inner surface is relatively complete, so that the obtained cylindrical battery has a relatively high energy density while mitigating a problem of corrosion on the inner surface of the side wall of the housing. In this application, the cross-sectional area of the accommodating cavity refers to an area of a shape corresponding to an outer contour of the accommodating cavity; and the cross-sectional area of the electrode assembly refers to an area of a shape corresponding to an outer contour of the electrode assembly.

In some embodiments of this application, at 25°C, a viscosity η of the electrolyte ranges from 2 mPa·s to 5 mPa·s. For example, the viscosity η of the electrolyte may be 2 mPa·s, 2.2 mPa·s, 2.4 mPa·s, 2.5 mPa·s, 2.7 mPa·s, 2.9 mPa·s, 3 mPa·s, 3.2 mPa·s, 3.4 mPa·s, 3.5 mPa·s, 3.7 mPa·s, 3.9 mPa·s, 4 mPa·s, 4.2 mPa·s, 4.4 mPa·s, 4.5 mPa·s, 4.7 mPa·s, 4.9 mPa·s, 5 mPa·s, or a range defined by any two values therebetween. This application does not limit components of the electrolyte, provided that the viscosity of the electrolyte is within the above range.

In some embodiments of this application, a roughness Ra of the inner surface ranges from 0.5 µm to 2.4 µm. For example, the roughness Ra of the inner surface may be 0.5 µm, 0.6 µm, 0.7 µm, 0.8 µm, 0.9 µm, 1.0 µm, 1.1 µm, 1.2 µm, 1.3 µm, 1.4 µm, 1.5 µm, 1.6 µm, 1.7 µm, 1.8 µm, 1.9 µm, 2 µm, 2.1 µm, 2.2 µm, 2.3 µm, 2.4 µm, or a range defined by any two values therebetween. The roughness Ra of the inner surface is within the above range, so that the electrolyte is facilitated to wet the inner surface of the side wall of the housing, and a liquid film is formed on the inner surface, thereby mitigating a problem that by-products in the cylindrical battery corrode the inner surface of the side wall of the housing due to direct contact with the inner surface.

In some embodiments of this application, the inner surface is provided with a plurality of pores. In some embodiments of this application, the plurality of pores are uniformly distributed on the inner surface. In some embodiments of this application, a pore diameter d of a single pore ranges from 1 µm to 5 µm, and a depth h thereof ranges from 5 µm to 20 µm. For example, the pore diameter d of the single pore may be 1 µm, 1.5 µm, 2 µm, 2.5 µm, 3 µm, 3.5 µm, 4 µm, 4.5 µm, 5 µm, or a range defined by any two values therebetween. For example, the depth h of the single pore may be 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, or a range defined by any two values therebetween. By regulating the pore diameter and depth of the single pore within the above ranges, the electrolyte has a certain capillary action on the inner surface of the side wall of the housing, which is conducive to forming a liquid film of the electrolyte on the inner surface of the side wall of the housing, thereby mitigating a problem that by-products in the cylindrical battery corrode the inner surface of the side wall of the housing due to direct contact with the inner surface.

In some embodiments of this application, a pore density N ranges from 5000 pcs/mm² to 20000 pcs/mm². For example, the pore density N may be 5000 pcs/mm², 6000 pcs/mm², 7000 pcs/mm², 8000 pcs/mm², 9000 pcs/mm², 10000 pcs/mm², 11000 pcs/mm², 12000 pcs/mm², 13000 pcs/mm², 14000 pcs/mm², 15000 pcs/mm², 16000 pcs/mm², 17000 pcs/mm², 18000 pcs/mm², 19000 pcs/mm², 20000 pcs/mm², or a range defined by any two values therebetween. By regulating the pore density within the above range, the electrolyte is facilitated to better form a liquid film on the inner surface of the side wall of the housing, which further mitigates a problem that by-products in the cylindrical battery corrode the inner surface of the side wall of the housing due to direct contact with the inner surface.

In some embodiments of this application, 5000 pcs/mm²≤N≤20000 pcs/mm², 1 µm≤d≤2 µm, and 5 µm≤h<10 µm. In some embodiments of this application, 5000 pcs/mm²<N≤15000 pcs/mm², 2 µm<d≤3 µm, and 10 µm≤h≤15 µm. In some embodiments of this application, 5000 pcs/mm²<N≤10000 pcs/mm², 3 µm<d≤5 µm, and 15 µm<h≤20 µm. The pore density, diameter, and depth match each other, which is conducive to better forming a liquid film of the electrolyte on the inner surface of the side wall of the housing, thereby further mitigating a problem that by-products in the cylindrical battery corrode the inner surface of the side wall of the housing due to direct contact with the inner surface.

In some embodiments of this application, a diameter D of the cylindrical battery ranges from 17 mm to 65 mm. For example, the diameter D of the cylindrical battery may be 17 mm, 18 mm, 20 mm, 21 mm, 25 mm, 30 mm, 35 mm, 40 mm, 45 mm, 46 mm, 49 mm, 50 mm, 55 mm, 60 mm, 65 mm, or a range defined by any two values therebetween. When the diameter is within the above range, the cylindrical battery is applicable to a wide range of scenarios.

In some embodiments of this application, the housing includes a substrate layer and a primer layer. An overall thickness of the obtained housing is relatively small, which is conducive to taking into account a volumetric energy density or gravimetric energy density of the cylindrical battery.

In some embodiments of this application, the housing includes a substrate layer, a primer layer, and a functional layer, the primer layer is located between the substrate layer and the functional layer, the functional layer faces the electrode assembly, and a thickness H of the functional layer ranges from 1 nm to 100 nm. In some embodiments of this application, 10 nm≤H≤50 nm. For example, the thickness H of the functional layer may be 1 nm, 5 nm, 10 nm, 15 nm, 20 nm, 25 nm, 30 nm, 35 nm, 40 nm, 45 nm, 50 nm, 55 nm, 60 nm, 65 nm, 70 nm, 75 nm, 80 nm, 85 nm, 90 nm, 95 nm, 100 nm, or a range defined by any two values therebetween. The functional layer includes a functional material. The functional material includes at least one of aluminum oxide, titanium dioxide, zinc oxide, titanium nitride, lithium fluoride or titanium trioxide. The functional layer includes the above functional material, and the thickness of the functional layer is within the above range, so that the functional layer is less prone to react with by-products in the cylindrical battery. This can mitigate a problem that the by-products in the cylindrical battery corrode the housing due to direct contact with the primer layer and the substrate layer of the housing.

In some embodiments of this application, the functional layer is a single layer, so that a preparation method thereof is simple, and a problem that by-products in the cylindrical battery corrode the housing due to direct contact with the primer layer and the substrate layer of the housing can be mitigated.

In some embodiments of this application, the functional layer includes a first material layer and a second material layer, that is, the functional layer includes two layers. The first material layer includes a first functional material, the second material layer includes a second functional material, and a mass ratio of the first functional material to the second functional material is (0.2 to 5):1. For example, the mass ratio of the first functional material to the second functional material may be 0.2:1, 0.5:1, 1:1, 1.5:1, 2:1, 2.5:1, 3:1, 3.5:1, 4:1, 4.5:1, 5:1, or a range defined by any two ratios therebetween. The first functional material and the second functional material each independently include at least one of aluminum oxide, titanium dioxide, zinc oxide, titanium nitride, lithium fluoride or titanium trioxide. The functional layer includes the first material layer and the second material layer, and the mass ratio and types of the first functional material and the second functional material are regulated within the above ranges, so that the obtained functional layer is less prone to react with by-products in the cylindrical battery, and a problem that the by-products in the cylindrical battery corrode the housing due to direct contact with the primer layer and the substrate layer of the housing can be mitigated.

In some embodiments of this application, the first functional material and the second functional material are different. In some embodiments of this application, the first material layer is located between the primer layer and the second material layer. In some embodiments of this application, the second material layer is located between the primer layer and the first material layer.

In some embodiments of this application, a thickness H1 of the substrate layer ranges from 100 µm to 1000 µm, and a material of the substrate layer includes at least one of steel, aluminum, or aluminum alloy. For example, the thickness H1 of the substrate layer may be 100 µm, 125 µm, 150 µm, 175 µm, 200 µm, 225 µm, 250 µm, 275 µm, 300 µm, 325 µm, 350 µm, 375 µm, 400 µm, 500 µm, 600 µm, 700 µm, 800 µm, 900 µm, 1000 µm, or a range defined by any two values therebetween. The substrate layer is a main supporting layer of the housing. The material and thickness of the substrate layer are within the above ranges, so that the obtained housing has good structural stability.

In some embodiments of this application, a thickness H2 of the primer layer ranges from 1 µm to 10 µm, and a material of the primer layer includes at least one of nickel, nickel alloy, or inorganic ceramic particles. For example, the thickness H2 of the primer layer may be 1 µm, 2 µm, 3 µm, 4 µm, 5 µm, 6 µm, 7 µm, 8 µm, 9 µm, 10 µm, or a range defined by any two values therebetween. The primer layer is mainly provided to prevent the electrolyte from directly contacting the substrate layer to corrode the substrate layer. Regulating the thickness of the primer layer within the above range can protect the substrate layer on the one hand, and enable the obtained housing to have an appropriate overall thickness on the other hand, which is conducive to taking into account the energy density of the cylindrical battery.

In this application, the housing including the substrate layer and the primer layer may be obtained via purchase, and a housing with a desired thickness and material may be selected as required. The thicknesses of the substrate layer and the primer layer may be determined with reference to test methods provided in this application.

A second aspect of this application provides a preparation method of the cylindrical battery according to any of the foregoing embodiments, including the following steps: performing functionalization treatment on a substrate housing to obtain the housing, where the functionalization treatment includes one of plasma activation, laser etching, or atomic layer deposition. A dyne value of an inner surface of a side wall of the obtained housing is greater than or equal to 40 dyn/cm, and a contact angle between the electrolyte and the inner surface ranges from 0° to 19°, so that the electrolyte is facilitated to wet the inner surface of the side wall of the housing, and a liquid film is formed on the inner surface, thereby mitigating a problem that by-products in the cylindrical battery corrode the inner surface of the side wall of the housing due to direct contact with the inner surface. In some embodiments of this application, the dyne value of the inner surface of the side wall of the obtained housing ranges from 40 dyn/cm to 55 dyn/cm.

In this application, the substrate housing includes a substrate layer and a primer layer. A material and a thickness of the substrate layer are the same as those of the above substrate layer. A material and a thickness of the primer layer are the same as those of the above primer layer.

In some embodiments of this application, the functionalization treatment is the plasma activation, an atmosphere of the plasma activation is a mixed gas of an inert gas and a reactive gas, and a volume ratio of the inert gas to the reactive gas is (1 to 4):1, where the inert gas includes at least one of argon or helium, and the reactive gas includes at least one of oxygen, hydrogen, or nitrogen. For example, the volume ratio of the inert gas to the reactive gas may be 1:1, 1.5:1, 2:1, 2.5:1, 3:1, 3.5:1, 4:1, or a range defined by any two ratios therebetween. By adopting the above atmosphere of the plasma activation and regulating the volume ratio of the inert gas to the reactive gas within the above range, a roughness of the inner surface of the side wall of the housing may be changed, a roughness Ra of the inner surface of the side wall of the obtained housing ranges from 0.5 µm to 2.4 µm, the dyne value is greater than or equal to 40 dyn/cm, and the contact angle between the electrolyte and the inner surface ranges from 0° to 19°. In some embodiments of this application, the dyne value of the inner surface of the side wall of the obtained housing ranges from 42 dyn/cm to 47 dyn/cm. Therefore, the electrolyte is facilitated to wet the inner surface of the side wall of the housing, and a liquid film is formed on the inner surface, thereby mitigating a problem that by-products in the cylindrical battery corrode the inner surface of the side wall of the housing due to direct contact with the inner surface.

This application does not impose special restrictions on a gas flow rate, treatment time, vacuum degree, and power in a plasma activation process. These parameters may be selected according to a desired dyne value of the inner surface of the side wall of the housing, provided that the purpose of this application can be achieved. For example, the gas flow rate in the plasma activation process may range from 50 mL/min to 500 mL/min. For example, the treatment time in the plasma activation process may range from 1 min to 30 min. For example, the vacuum degree in the plasma activation process may range from 1 Pa to 100 Pa. For example, the power in the plasma activation process may range from 50 W to 300 W.

In the plasma activation process, the volume ratio of the inert gas to the reactive gas, gas flow rate, treatment time, vacuum degree, and power all affect the roughness of the inner surface of the side wall of the obtained housing. For example, when other conditions remain unchanged, increasing the volume ratio of the inert gas to the reactive gas increases the roughness of the inner surface of the side wall of the housing, and vice versa. For another example, when other conditions remain unchanged, increasing the gas flow rate increases the roughness of the inner surface of the side wall of the housing. For another example, when other conditions remain unchanged, prolonging the treatment time increases the roughness of the inner surface of the side wall of the housing. For another example, when other conditions remain unchanged, increasing the power increases the roughness of the inner surface of the side wall of the housing.

In some embodiments of this application, the functionalization treatment is the laser etching. The laser etching can form a plurality of pores on the inner surface of the side wall of the housing, a dyne value of the inner surface of the side wall of the obtained housing is greater than or equal to 40 dyn/cm, and a contact angle between the electrolyte and the inner surface ranges from 0° to 19°. In some embodiments of this application, the dyne value of the inner surface of the side wall of the obtained housing ranges from 49 dyn/cm to 55 dyn/cm. This application does not limit power of the laser etching, provided that pores with a desired diameter and depth can be obtained. For example, the power of the laser etching ranges from 0.5 W to 100 W.

Generally, the power of the laser etching affects the diameter and depth of the pores formed via etching. For example, when other conditions remain unchanged, increasing the power of the laser etching increases the diameter and depth of the pores, and vice versa. A density of the pores may be adjusted by intermittent laser emission and laser displacement, and a specific implementation method may be selected according to actual conditions.

In some embodiments of this application, the functionalization treatment is the atomic layer deposition. The above functional material, first functional material, or second functional material is deposited on the primer layer of the housing via the atomic layer deposition to obtain a functional layer. A surface of the functional layer is also the inner surface of the side wall of the housing. A dyne value of the surface of the functional layer is greater than or equal to 40 dyn/cm, and a contact angle between the electrolyte and the surface of the functional layer ranges from 0° to 19°. In some embodiments of this application, the dyne value of the inner surface of the side wall of the obtained housing ranges from 40 dyn/cm to 50 dyn/cm. This application does not limit a temperature of the atomic layer deposition, provided that the purpose of this application can be achieved. For example, the temperature of the atomic layer deposition ranges from 100°C to 300°C.

In some embodiments of this application, the functional layer is a single layer. The above functional material is deposited via the atomic layer deposition to obtain a housing including the functional layer. The thickness of the functional layer varies with a mass of the deposited functional material. Generally, when other conditions remain unchanged, the greater the mass of the deposited functional material, the greater the thickness of the functional layer, and vice versa.

In some embodiments of this application, the functional layer includes a first material layer and a second material layer. The above first functional material and second functional material are deposited via the atomic layer deposition to obtain a housing including the functional layer. The first functional material may be deposited first, and then the second functional material may be deposited, so that the first material layer in the obtained housing is located between the primer layer and the second material layer; or the second functional material may be deposited first, and then the first functional material may be deposited, so that the second material layer in the obtained housing is located between the primer layer and the first material layer. The thickness of the functional layer varies with a total mass of the deposited first functional material and second functional material. Generally, when other conditions remain unchanged, the greater the total mass of the deposited first functional material and second functional material, the greater the thickness of the functional layer, and vice versa.

In this application, the electrode assembly includes a positive electrode sheet, a negative electrode sheet, and a separator.

The positive electrode sheet includes a positive current collector and a positive material layer disposed on at least one surface of the positive current collector. The above "positive material layer disposed on at least one surface of the positive current collector" means that the positive material layer may be disposed on one surface of the positive current collector along its thickness direction, or on two surfaces of the positive current collector along its thickness direction. It should be noted that the "surface" herein may be an entire region of the surface of the positive current collector or a partial region of the surface of the positive current collector. This is not particularly limited in this application, provided that the purpose of this application can be achieved.

This application does not impose special restrictions on the positive current collector, provided that the purpose of this application can be achieved. For example, the positive current collector may include aluminum foil, aluminum alloy foil, or a composite current collector (for example, an aluminum-carbon composite current collector).

The positive material layer includes a positive active material. This application does not impose special restrictions on the positive active material, provided that the purpose of this application can be achieved. For example, the positive active material may include, but is not limited to, at least one of lithium nickel cobalt manganate (for example, NCM811, NCM622, NCM523, or NCM111), lithium nickel cobalt aluminate, lithium iron phosphate, a lithium-rich manganese-based material, lithium cobalt oxide (LiCoO₂), lithium manganate, lithium manganese iron phosphate, or lithium titanate.

The positive material layer may further include a conductive agent and a positive electrode binder. This application does not impose special restrictions on types of the conductive agent and the positive electrode binder, provided that the purpose of this application can be achieved. For example, the conductive agent may include, but is not limited to, at least one of conductive carbon black (Super P), carbon nanotubes (CNTs), carbon fiber, flake graphite, graphene, a metal material, or a conductive polymer. The conductive carbon black may include, but is not limited to, at least one of acetylene black or Ketjen black. The above carbon nanotubes may include, but are not limited to, single-walled carbon nanotubes and/or multi-walled carbon nanotubes. The above carbon fiber may include, but is not limited to, vapor grown carbon fiber (VGCF) and/or carbon nanofiber. The above metal material may include, but is not limited to, metal powder and/or metal fiber. Specifically, the metal may include, but is not limited to, at least one of copper, nickel, aluminum, or silver. The above conductive polymer may include, but is not limited to, at least one of a polyphenylene derivative, polyaniline, polythiophene, polyacetylene, or polypyrrole. The binder may include, but is not limited to, at least one of polyacrylic acid, sodium polyacrylate, potassium polyacrylate, lithium polyacrylate, polyimide, polyvinyl alcohol, carboxymethyl cellulose, sodium carboxymethyl cellulose, lithium carboxymethyl cellulose, polyamideimide, styrene-butadiene rubber, or polyvinylidene fluoride. This application does not impose special restrictions on a mass ratio of the positive active material, the conductive agent, and the binder in the positive material layer. Those skilled in the art may select the mass ratio according to actual needs, provided that the purpose of this application can be achieved.

This application does not impose special restrictions on thicknesses of the positive current collector and the positive material layer, provided that the purpose of this application can be achieved. For example, the thickness of the positive current collector ranges from 5 µm to 20 µm, and the thickness of the positive material layer ranges from 30 µm to 120 µm.

Optionally, the positive electrode sheet may further include a conductive layer. The conductive layer is located between the positive current collector and the positive material layer. A composition of the conductive layer is not particularly limited. The conductive layer may be a conductive layer commonly used in the art. The conductive layer includes a conductive agent and a binder. This application does not impose special restrictions on the conductive agent and the binder in the conductive layer. For example, the conductive agent may be at least one of the above conductive agents, and the binder may be at least one of the above positive electrode binders.

In this application, the negative electrode sheet includes a negative current collector and a negative material layer disposed on at least one surface of the negative current collector. The above "negative material layer disposed on at least one surface of the negative current collector" means that the negative material layer may be disposed on one surface of the negative current collector along its thickness direction, or on two surfaces of the negative current collector along its thickness direction. It should be noted that the "surface" herein may be an entire region of the surface of the negative current collector or a partial region of the surface of the negative current collector. This is not particularly limited in this application, provided that the purpose of this application can be achieved.

This application does not impose special restrictions on the negative current collector, provided that the purpose of this application can be achieved. For example, the negative current collector may include copper foil, copper alloy foil, nickel foil, stainless steel foil, titanium foil, nickel foam, copper foam, or a composite current collector. For example, the composite current collector may be a lithium-copper composite current collector, a carbon-copper composite current collector, a nickel-copper composite current collector, a titanium-copper composite current collector, or the like.

The negative material layer includes a negative active material. This application does not impose special restrictions on the negative active material, provided that the purpose of this application can be achieved. For example, the negative active material may include, but is not limited to, at least one of natural graphite, artificial graphite, mesocarbon microbeads, hard carbon, soft carbon, silicon, silicon-carbon composite, Li-Sn alloy, Li-Sn-O alloy, Sn, SnO, SnO₂, spinel-structured lithiated TiO₂-Li₄Ti₅O₁₂, or Li-Al alloy.

In some embodiments of this application, the negative material layer may further include a conductive agent and a binder. This application does not impose special restrictions on types of the conductive agent and the binder, provided that the purpose of this application can be achieved. For example, the conductive agent may be at least one of the above conductive agents, and the binder may be at least one of the above positive electrode binders. This application does not impose special restrictions on a mass ratio of the negative active material, the conductive agent, and the binder in the negative material layer. Those skilled in the art may select the mass ratio according to actual needs, provided that the purpose of this application can be achieved.

This application does not impose special restrictions on a thickness of the negative material layer, provided that the purpose of this application can be achieved. For example, the thickness of the negative material layer ranges from 30 µm to 120 µm. This application does not impose special restrictions on the thickness of the negative current collector, provided that the purpose of this application can be achieved. For example, the thickness of the negative current collector ranges from 3 µm to 15 µm.

Optionally, the negative electrode sheet may further include a conductive layer. The conductive layer is located between the negative current collector and the negative material layer. This application does not impose special restrictions on a composition of the conductive layer. The conductive layer may be a conductive layer commonly used in the art. For example, the conductive layer includes a conductive agent and a binder. This application does not impose special restrictions on the conductive agent and the binder in the conductive layer. For example, the conductive agent may be at least one of the above conductive agents, and the binder may be at least one of the above positive electrode binders.

This application does not impose special restrictions on the separator, provided that the purpose of this application can be achieved. For example, a material of the separator may include, but is not limited to, at least one of polyethylene (PE) and polypropylene (PP)-based polyolefin (PO), polyester (for example, a polyethylene terephthalate (PET) film), cellulose, polyimide (PI), polyamide (PA), spandex, or aramid. A type of the separator may include at least one of a woven film, a non-woven film, a microporous film, a composite film, a rolled film, or a spun film.

In some embodiments of this application, the separator may include a substrate layer and a surface treatment layer. The substrate layer may be a non-woven fabric, a film, or a composite film with a porous structure. A material of the substrate layer may include at least one of polyethylene, polypropylene, polyethylene terephthalate, or polyimide. Optionally, a polypropylene porous film, a polyethylene porous film, a polypropylene non-woven fabric, a polyethylene non-woven fabric, or a polypropylene-polyethylene-polypropylene porous composite film may be used.

Optionally, at least one surface of the substrate layer is provided with a surface treatment layer. The surface treatment layer may be a polymer layer or an inorganic layer, or a layer formed by mixing a polymer and an inorganic substance.

In some embodiments of this application, the inorganic layer includes inorganic particles and a binder. This application does not impose special restrictions on the inorganic particles. For example, the inorganic particles may include at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. This application does not impose special restrictions on the binder. For example, the binder may be at least one of the above binders. In some embodiments of this application, the polymer layer includes a polymer, and a material of the polymer includes at least one of polyamide, polyacrylonitrile, an acrylate polymer, polyacrylic acid, polyacrylate, polyvinylpyrrolidone, polyvinyl ether, polyvinylidene fluoride, or poly(vinylidene fluoride-hexafluoropropylene).

In this application, the thickness of the separator is not particularly limited, provided that the purpose of this application can be achieved. For example, the thickness of the separator may range from 3 µm to 30 µm.

In this application, the electrolyte includes a lithium salt and a non-aqueous solvent.

This application does not impose special restrictions on the lithium salt, provided that the purpose of this application can be achieved. For example, the lithium salt may include, but is not limited to, at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, Li₂SiF₆, lithium bis(oxalato)borate (C₄BLiO₈, abbreviated as LiBOB), or lithium difluoroborate. This application does not impose special restrictions on a percentage of the lithium salt in the electrolyte, provided that the purpose of this application can be achieved.

This application does not impose special restrictions on the non-aqueous solvent, provided that the purpose of this application can be achieved. For example, the non-aqueous solvent may include, but is not limited to, at least one of a carbonate compound, a carboxylate compound, an ether compound, or another organic solvent.

The above carbonate compound may include, but is not limited to, at least one of a chain carbonate compound, a cyclic carbonate compound, or a fluorinated carbonate compound. The above chain carbonate compound may include, but is not limited to, at least one of dimethyl carbonate (DMC), diethyl carbonate (DEC), dipropyl carbonate (DPC), methyl propyl carbonate (MPC), ethyl propyl carbonate (EPC), or methyl ethyl carbonate (MEC). The above cyclic carbonate may include, but is not limited to, at least one of ethylene carbonate (EC), propylene carbonate (PC), 1,2-butylene carbonate (BC), or vinyl ethylene carbonate (VEC). The fluorinated carbonate compound may include, but is not limited to, at least one of fluoroethylene carbonate (FEC), 4,5-difluoro-1,3-dioxolan-2-one, 4,4-difluoro-1,3-dioxolan-2-one, 4,4,5-trifluoro-1,3-dioxolan-2-one, 4,4,5,5-tetrafluoro-1,3-dioxolan-2-one, 4-fluoro-5-methyl-1,3-dioxolan-2-one, 4-fluoro-4-methyl-1,3-dioxolan-2-one, 4,5-difluoro-4-methyl-1,3-dioxolan-2-one, 4,4,5-trifluoro-5-methyl-1,3-dioxolan-2-one, or 4-trifluoromethyl ethylene carbonate. The above carboxylate compound may include, but is not limited to, at least one of methyl formate, methyl acetate, ethyl acetate, n-propyl acetate, tert-butyl acetate, methyl propionate, ethyl propionate, propyl propionate, γ-butyrolactone, decanolactone, valerolactone, or caprolactone. The above ether compound may include, but is not limited to, at least one of dibutyl ether, tetraethylene glycol dimethyl ether, diethylene glycol dimethyl ether, 1,2-dimethoxyethane, 1,2-diethoxyethane, 1-ethoxy-1-methoxyethane, 2-methyltetrahydrofuran, or tetrahydrofuran. The above another organic solvent may include, but is not limited to, at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate. This application does not impose special restrictions on a percentage of the non-aqueous solvent in the electrolyte, provided that the purpose of this application can be achieved.

A preparation process of the cylindrical battery of this application is well known to those skilled in the art, and is not particularly limited in this application. For example, the preparation process of the cylindrical battery may include, but is not limited to, the following steps: stacking a positive electrode sheet, a separator, and a negative electrode sheet sequentially; carrying out operations such as winding and folding as needed to obtain an electrode assembly with a wound structure; placing the electrode assembly in a housing; and injecting an electrolyte into the housing, followed by sealing to obtain the cylindrical battery. In addition, an overcurrent prevention element, a guide plate, or the like may also be placed in the housing as needed, thereby preventing a pressure inside the cylindrical battery from rising, overcharging, and overdischarging.

In some embodiments of this application, the cylindrical battery of this application may include, but is not limited to, a lithium-metal cylindrical battery, a lithium-ion cylindrical battery (a lithium-ion battery), a lithium-polymer cylindrical battery, a lithium-ion-polymer cylindrical battery, or the like. In some embodiments of this application, the cylindrical battery includes a lithium-ion battery.

A third aspect of this application provides an electronic device, including the cylindrical battery according to any of the foregoing embodiments or the cylindrical battery prepared according to the preparation method according to any of the foregoing embodiments. Therefore, the electronic device provided in this application exhibits excellent service performance.

This application does not impose special restrictions on a type of the electronic device. The electronic device may be any electronic device known in the prior art. In some embodiments of this application, the electronic device may include, but is not limited to, a notebook computer, a pen-input computer, a mobile computer, an e-book player, a mobile phone, a portable fax machine, a portable copier, a portable printer, stereo headphones, a video recorder, an LCD television, a portable cleaner, a portable CD player, a mini disc, a transceiver, an electronic notebook, a calculator, a memory card, a portable tape recorder, a radio, a backup power supply, a motor, an automobile, a motorcycle, a power-assisted bicycle, a bicycle, a lighting fixture, a toy, a game console, a clock, an electric tool, a flashlight, a camera, a large household storage battery, a lithium-ion capacitor, or the like.

### Examples

Hereinafter, examples and comparative examples are provided to describe the embodiments of this application in more detail. Various tests and evaluations were carried out according to the following methods. In addition, unless otherwise specified, "parts" and "%" are on a mass basis.

### Test methods and equipment:

### Sampling of housing:

A cylindrical battery is disassembled to obtain a housing. The housing is cleaned with dimethyl carbonate, and then dried for later use.

Unless otherwise specified, the housing obtained from the above sampling is used in all the following test methods.

### Dyne value test:

Different types of dyne pens are used to test a dyne value of an inner surface of a side wall of the housing. An interval between dyne values of the dyne pens used is 1. During the test, a tip of the dyne pen is held at 90° to the inner surface of the side wall of the housing, a force of 5 N is applied, a liquid line of 3 cm±0.5 cm in length is drawn within 2 seconds, and shrinkage of the liquid line is observed 5 seconds after drawing.

If the liquid line is stable, another dyne pen with a higher dyne value is used for testing until the liquid line shrinks, and a model of a dyne pen used for the last time when the liquid line is stable is recorded as the dyne value of the inner surface of the side wall of the housing.

If the liquid line shrinks, another dyne pen with a lower dyne value is used for testing until the liquid line is stable, and a model of a dyne pen used when the liquid line is stable is recorded as the dyne value of the inner surface of the side wall of the housing.

### Contact angle test:

A contact angle tester (manufacturer: Guangdong Beidou Precision Instrument Co., Ltd., model: CA100S) is used to test a contact angle of an electrolyte on the inner surface of the side wall of the housing. Each example or comparative example is tested 3 times. An average value is taken as a final result. The electrolyte is the electrolyte in each example or comparative example.

### Roughness test:

A roughness tester (manufacturer: Keyence, model: VR5000) is used to test a roughness of the inner surface of the side wall of the housing. Each example or comparative example is tested 3 times. An average value is taken as a final result.

### S1/S2 test:

A computed tomography (CT) scanner (manufacturer: Zeiss, model: Metrotom 1500 225kv G3) is used to test a cross-sectional area S1 of an accommodating cavity and a cross-sectional area S2 of an electrode assembly in the cylindrical battery along a direction of a winding axis of the electrode assembly. Subsequently, S1/S2 is calculated. Each example or comparative example is tested 3 times. An average value is taken as a final result.

### Test of pore diameter, depth and density of pores:

A scanning electron microscope (manufacturer: Thermo Fisher, model: Apreo S HiVac) is used to test a diameter and depth of a single pore in the inner surface of the side wall of the housing. 10 random pores are tested for each example or comparative example. An average value is taken as a final result.

The scanning electron microscope is used to observe the inner surface of the side wall of the housing. A 1 mm² region is selected. A quantity of pores is counted as a pore density. Three different random regions are tested for each example or comparative example. An average value is taken as a final result. In the selected region, when a single pore is incomplete, and an area of this pore in the selected region accounts for less than 50% of an area of a single complete pore, this pore is not counted; and when the area of this pore in the selected region accounts for 50% or more of the area of the single complete pore, this pore is counted.

### Thickness test:

The scanning electron microscope is used to take an SEM image of a cross section of the side wall of the housing along its thickness direction. A thickness of each layer is measured in the SEM image. In each example or comparative example, five different random positions are selected for testing the thickness of each layer. An average value is taken as a final result. The above layers may be a substrate layer, a primer layer, or a functional layer.

### Electrolyte viscosity test:

A digital rotational viscometer (manufacturer: Shenzhen Junda Times Instrument Co., Ltd., model: NDJ-5S) is used to test a viscosity of the electrolyte.

### Corrosion area ratio test:

At 25°C, charging to 4.25 V is carried out at a constant current of 6 A, followed by charging to 150 mA at a constant voltage of 4.25 V. Subsequently, the cylindrical battery is placed in an environment with a temperature of 65°C and a humidity of 93% for 30 days, taken out, and disassembled. The inner surface of the side wall of the housing of the cylindrical battery is observed. A region with a black or yellow inner surface is a corrosion region, and a region with a silvery inner surface is a non-corrosion region. Corrosion area percentage = Area of the corrosion region / Area of the inner surface of the side wall × 100%.

### Example 1-1

### <Preparation of housing>

A substrate housing included a substrate layer and a primer layer. A material of the substrate layer was 304 stainless steel with a thickness H1 of 200 µm. A material of the primer layer was nickel with a thickness of 2 µm.

The substrate housing was subjected to plasma activation treatment to obtain a housing, where an atmosphere of the plasma activation was a mixed gas of argon and oxygen, a volume ratio of argon to oxygen was 3:1, a gas flow rate of the mixed gas was 200 mL/min, and a treatment time, a vacuum degree, and a power of the plasma activation treatment were 15 min, 20 Pa, and 300 W, respectively.

### <Preparation of positive electrode sheet>

A positive active material (LiCoO₂), a conductive agent (conductive carbon black Super P), and a binder (polyvinylidene fluoride) were mixed at a mass ratio of 97.9:0.9:1.2. N-methylpyrrolidone (NMP) was added as a solvent to prepare a slurry with a solid content of 75wt%. The slurry was uniformly mixed under vacuum to obtain a positive slurry. The positive slurry was uniformly coated on one surface of a positive current collector (aluminum foil) with a thickness of 13 µm, followed by drying at 120°C to obtain a positive electrode sheet with a positive material layer coated on one side, where a coating weight of the positive material layer was 200 mg/1540.25 mm². Subsequently, the above steps were repeated on the other surface of the aluminum foil, to obtain a positive electrode sheet with positive material layers coated on both sides. After drying at 120°C, cold pressing was performed, followed by cutting and tab welding, to obtain a positive electrode sheet with a specification of 55 mm×1130 mm for later use, where a thickness of the positive material layer on one side was 42 µm.

### <Preparation of negative electrode sheet>

Negative active materials (artificial graphite and a silicon-carbon material), a binder (styrene-butadiene rubber), and a conductive agent (acetylene black) were mixed at a mass ratio of 87.4:10:1.4:1.2, deionized water was added as a solvent to prepare a slurry with a solid content of 45wt%, and the slurry was stirred uniformly by a vacuum mixer to obtain a negative slurry, where a mass ratio of an element silicon to an element carbon in the silicon-carbon material was 1:1. The negative slurry was uniformly coated on one surface of a negative current collector (copper foil) with a thickness of 8 µm, followed by drying at 120°C to obtain a negative electrode sheet with a negative material layer coated on one side, where a coating weight of the negative material layer was 110 mg/1540.25 mm². Subsequently, the above steps were repeated on the other surface of the copper foil, to obtain a negative electrode sheet with negative material layers coated on both sides. After drying at 120°C, cold pressing was performed, followed by cutting and tab welding, to obtain a negative electrode sheet with a specification of 58 mm×1200 mm for later use, where a thickness of the negative material layer on one side was 35 µm.

### <Preparation of electrolyte>

In an environment with a water content of less than 10 ppm, diethyl carbonate (DEC) and ethylene carbonate (EC) were mixed at a mass ratio of 7:3 to obtain an organic solvent. Subsequently, fluoroethylene carbonate (FEC) and an electrolyte salt LiPF₆ were added to the organic solvent, followed by uniform mixing to obtain an electrolyte. Based on a mass of the electrolyte, a mass percentage of the fluoroethylene carbonate was 5%, a concentration of the electrolyte salt was 1 mol/L, and the rest was the organic solvent.

### <Separator>

A porous polyethylene film with a thickness of 7 µm (provided by Celgard) was used as a separator.

### <Preparation of cylindrical battery>

The positive electrode sheet, the separator, and the negative electrode sheet prepared above were stacked sequentially, so that the separator was between the positive electrode sheet and the negative electrode sheet to play a role of isolation, and wound to obtain an electrode assembly. The electrode assembly was loaded into the housing prepared above, moisture was removed at 80°C, the electrolyte prepared above was injected, and a cylindrical battery was obtained through processes such as vacuum packaging, standing, formation, degassing, and trimming. The diameter of the cylindrical battery was 18 mm. An upper limit voltage of the formation was 4.15 V. A temperature of the formation was 70°C. A standing time for the formation was 2 h.

### Examples 1-2 to 1-9 and Examples 1-12 to 1-14

Except that relevant preparation parameters were adjusted according to Table 1, the rest were the same as those in Example 1-1.

### Example 1-10

Except that an electrolyte was prepared according to the following steps, the rest were the same as those in Example 1-1:

### <Preparation of electrolyte>

Except that a concentration of the electrolyte salt was 1.3 mol/L, the rest were the same as those in Example 1-1.

### Example 1-11

Except that an electrolyte was prepared according to the following steps, the rest were the same as those in Example 1-1:

### <Preparation of electrolyte>

Except that a mass percentage of fluoroethylene carbonate was 15% and a concentration of the electrolyte salt was adjusted to 1.8 mol/L, the rest were the same as those in Example 1-1.

### Example 2-1

Except that a housing was prepared according to the following steps, the rest were the same as those in Example 1-1:

### <Preparation of housing>

The substrate housing was the same as that in Example 1-1.

The substrate housing was treated via laser etching to obtain the housing. A pore diameter d, a depth h, and a density of a single pore were 3 µm, 10 µm, and 15000 pcs/mm², respectively.

### Examples 2-2 to 2-17

Except that relevant preparation parameters were adjusted according to Table 2, the rest were the same as those in Example 2-1. In Examples 2-7 and 2-8, when a diameter of the cylindrical battery varied, sizes of the positive electrode sheet, the negative electrode sheet, and the separator varied accordingly, so that the diameters of the cylindrical batteries were as shown in Table 2. The electrolyte in Example 2-13 was the same as that in Example 1-10. The electrolyte in Example 2-14 was the same as that in Example 1-11.

### Example 3-1

Except that a housing was prepared according to the following steps, the rest were the same as those in Example 1-1:

### <Preparation of housing>

The substrate housing was the same as that in Example 1-1.

A functional material was deposited on a surface of the primer layer via atomic layer deposition to obtain the housing. A deposition temperature was 200°C. The functional material was aluminum oxide. A thickness of the functional layer was 50 nm.

### Examples 3-2 to 3-10 and Examples 3-19 to 3-25

Except that relevant preparation parameters were adjusted according to Table 3, the rest were the same as those in Example 3-1. The electrolyte in Example 3-21 was the same as that in Example 1-10. The electrolyte in Example 3-22 was the same as that in Example 1-11.

### Example 3-11

Except that a housing was prepared according to the following steps, the rest were the same as those in Example 1-1:

### <Preparation of housing>

The substrate housing was the same as that in Example 1-1.

A first functional material (aluminum oxide) was first deposited on a surface of the primer layer via atomic layer deposition, to obtain a substrate housing provided with a first material layer. Subsequently, a second functional material (titanium dioxide) was deposited, to obtain a substrate housing provided with a first material layer and a second material layer, that is, the housing was obtained. A deposition temperature was 200°C. A mass ratio of the first functional material to the second functional material was 0.2:1. The thickness of the functional layer was 50 nm.

### Examples 3-12 to 3-18

Except that relevant preparation parameters were adjusted according to Table 3, the rest were the same as those in Example 3-11.

### Comparative Example 1

Except that the substrate housing was directly used as a housing to prepare a cylindrical battery, the rest were the same as those in Example 1-1.

The preparation parameters and performance test results of each example and comparative example are shown in Tables 1 to 3.

**Table 1**

| | Inert gas | Reactive gas | Volume ratio of inert gas to reactive gas | H2 (µm) | η (mPa·s) | Ra (µm) | Dyne value (dyn/cm) | θ (°) | S1/S2 | Corrosion area ratio of inner surface of side wall (%) |
|---|---|---|---|---|---|---|---|---|---|---|
| Example 1-1 | argon | oxygen | 3:1 | 2 | 2.5 | 2.0 | 46 | 10.8 | 0.97 | 20.50 |
| Example 1-2 | argon | oxygen | 1:1 | 2 | 2.5 | 0.8 | 42 | 14.9 | 0.97 | 26.03 |
| Example 1-3 | argon | oxygen | 2:1 | 2 | 2.5 | 1.6 | 45 | 13.2 | 0.97 | 23.32 |
| Example 1-4 | argon | oxygen | 4:1 | 2 | 2.5 | 2.4 | 47 | 10.7 | 0.97 | 20.21 |
| Example 1-5 | argon | oxygen | 0.5:1 | 2 | 2.5 | 0.6 | 40 | 18.4 | 0.97 | 28.41 |
| Example 1-6 | argon | oxygen | 5:1 | 2 | 2.5 | 3.0 | 47 | 10.5 | 0.97 | 27.33 |
| Example 1-7 | helium | nitrogen | 3:1 | 2 | 2.5 | 1.9 | 46 | 11.7 | 0.97 | 20.10 |
| Example 1-8 | argon | oxygen | 3:1 | 1 | 2.5 | 1.9 | 46 | 11.0 | 0.97 | 20.83 |
| Example 1-9 | argon | oxygen | 3:1 | 10 | 2.5 | 2.0 | 46 | 10.9 | 0.97 | 20.99 |
| Example 1-10 | argon | oxygen | 3:1 | 2 | 3 | 2.0 | 46 | 11.0 | 0.97 | 21.08 |
| Example 1-11 | argon | oxygen | 3:1 | 2 | 5 | 2.0 | 46 | 11.5 | 0.97 | 22.11 |
| Example 1-12 | argon | oxygen | 3:1 | 2 | 2.5 | 2.0 | 46 | 10.8 | 0.96 | 22.32 |
| Example 1-13 | argon | oxygen | 3:1 | 2 | 2.5 | 2.0 | 46 | 10.8 | 0.98 | 20.10 |
| Example 1-14 | argon | oxygen | 3:1 | 2 | 2.5 | 2.0 | 46 | 10.8 | 0.95 | 30.21 |
| Comparative Example 1 | / | / | / | 2 | 2.5 | 0.2 | 36 | 35.0 | 0.97 | 40.12 |

| | | | | | | | | | | |
|---|---|---|---|---|---|---|---|---|---|---|
| Note: "/" in Table 1 indicates that there are no relevant parameters. | | | | | | | | | | |

From Examples 1-1 to 1-14 and Comparative Example 1, it can be seen that when the housing obtained via plasma activation treatment has a dyne value of the inner surface of the side wall of the housing within the range specified in this application and a contact angle between the electrolyte and the inner surface of the side wall is also within the range specified in this application, a corrosion area of the side wall of the housing of the obtained cylindrical battery is smaller, which indicates that a problem of corrosion on the inner surface of the side wall of the cylindrical battery provided by this application is mitigated.

In the plasma activation treatment, a volume ratio and types of the inert gas and the reactive gas affect a dyne value of the inner surface of the side wall of the housing, thereby affecting a contact angle between the electrolyte and the inner surface of the side wall. From Examples 1-1 to 1-7, it can be seen that when the volume ratio and types of the inert gas and the reactive gas are within the ranges specified in this application, the roughness of the inner surface of the side wall of the housing of the obtained cylindrical battery is within the range specified in this application, and the corrosion area is relatively small, which indicates that a problem of corrosion on the inner surface of the side wall of the cylindrical battery is mitigated. From Examples 1-1 to 1-4 and Example 1-6, it can be seen that as the volume ratio of the inert gas to the reactive gas increases, the roughness of the inner surface of the side wall of the housing also increases. Example 1-6 has the largest roughness. While the electrolyte wets the inner surface of the side wall of the housing, a larger roughness may also cause a problem that the electrolyte corrodes the inner surface of the side wall of the housing. Therefore, the corrosion area of the side wall of the housing of the cylindrical battery in Example 1-6 is larger than that in Example 1-4, but is still much lower than that in Comparative Example 1, which indicates that a problem of corrosion on the inner surface of the side wall of the cylindrical battery is mitigated. From Examples 1-1 and 1-7, it can be seen that the type of the reactive gas has a certain influence on the contact angle between the electrolyte and the inner surface of the side wall, but the corrosion area of the side wall of the housing of the obtained cylindrical battery is not much different.

From Examples 1-1, 1-8, and 1-9, it can be seen that the primer layer in the housing has a certain influence on the dyne value of the inner surface of the side wall of the housing, and the influence is relatively small. When the thickness of the primer layer in the housing is within the range specified in this application, the corrosion area of the side wall of the housing of the obtained cylindrical battery is relatively small, which indicates that a problem of corrosion on the inner surface of the side wall of the cylindrical battery is mitigated.

From Examples 1-1, 1-10, and 1-11, it can be seen that the contact angle between the electrolyte and the inner surface of the side wall varies with the viscosity of the electrolyte, thereby affecting the corrosion area of the side wall of the housing of the cylindrical battery. When the viscosity of the electrolyte is within the range specified in this application, the corrosion area of the side wall of the housing of the obtained cylindrical battery is relatively small, which indicates that a problem of corrosion on the inner surface of the side wall of the cylindrical battery is mitigated.

From Examples 1-1 and 1-12 to 1-14, it can be seen that the ratio S1/S2 of the cross-sectional area of the accommodating cavity to the cross-sectional area of the electrode assembly affects the corrosion area of the side wall of the housing of the cylindrical battery. When S1/S2 is within the range specified in this application, the corrosion area of the side wall of the housing of the obtained cylindrical battery is relatively small, which indicates that a problem of corrosion on the inner surface of the side wall of the cylindrical battery is mitigated.

**Table 2**

| | d (µm) | h (µm) | Pore density (pcs/mm²) | D (mm) | H2 (µm) | η (mPa·s) | Dyne value (dyn/ cm) | θ (°) | S1/S2 | Corrosion area ratio of inner surface of side wall (%) |
|---|---|---|---|---|---|---|---|---|---|---|
| Example 2-1 | 3 | 10 | 15000 | 18 | 2 | 2.5 | 55 | 5.0 | 0.97 | 0.07 |
| Example 2-2 | 3 | 10 | 5000 | 18 | 2 | 2.5 | 50 | 7.2 | 0.97 | 7.22 |
| Example 2-3 | 1 | 5 | 20000 | 18 | 2 | 2.5 | 52 | 5.8 | 0.97 | 5.47 |
| Example 2-4 | 1 | 5 | 5000 | 18 | 2 | 2.5 | 49 | 8.5 | 0.97 | 10.61 |
| Example 2-5 | 5 | 20 | 10000 | 18 | 2 | 2.5 | 54 | 5.5 | 0.97 | 3.85 |
| Example 2-6 | 5 | 20 | 5000 | 18 | 2 | 2.5 | 49 | 9.0 | 0.97 | 12.13 |
| Example 2-7 | 3 | 10 | 15000 | 17 | 2 | 2.5 | 55 | 5.0 | 0.97 | 0.07 |
| Example 2-8 | 3 | 10 | 15000 | 65 | 2 | 2.5 | 55 | 5.0 | 0.97 | 0.09 |
| Example 2-9 | 0.5 | 3 | 25000 | 18 | 2 | 2.5 | 40 | 17. 2 | 0.97 | 28.53 |
| Example 2-10 | 6 | 22 | 4000 | 18 | 2 | 2.5 | 45 | 10. 8 | 0.97 | 21.01 |
| Example 2-11 | 3 | 10 | 15000 | 18 | 1 | 2.5 | 55 | 5.0 | 0.97 | 0.08 |
| Example 2-12 | 3 | 10 | 15000 | 18 | 10 | 2.5 | 55 | 5.0 | 0.97 | 0.07 |
| Example 2-13 | 3 | 10 | 15000 | 18 | 2 | 3 | 55 | 5.1 | 0.97 | 0.09 |
| Example 2-14 | 3 | 10 | 15000 | 18 | 2 | 5 | 55 | 5.2 | 0.97 | 0.12 |
| Example 2-15 | 3 | 10 | 15000 | 18 | 2 | 2.5 | 55 | 5.0 | 0.96 | 1.29 |
| Example 2-16 | 3 | 10 | 15000 | 18 | 2 | 2.5 | 55 | 5.0 | 0.98 | 0.05 |
| Example 2-17 | 3 | 10 | 15000 | 18 | 2 | 2.5 | 55 | 5.0 | 0.95 | 15.24 |
| Comparative Example 1 | / | / | / | / | 2 | 2.5 | 36 | 35.0 | 0.97 | 40.12 |

| | | | | | | | | | | |
|---|---|---|---|---|---|---|---|---|---|---|
| Note: "/" in Table 2 indicates that there are no relevant parameters. | | | | | | | | | | |

From Examples 2-1 to 2-17 and Comparative Example 1, it can be seen that for a housing obtained by forming a plurality of pores on an inner surface of a side wall of the housing via laser etching treatment, when a dyne value of the inner surface of the side wall of the housing is within the range specified in this application, and a contact angle between the electrolyte and the inner surface of the side wall is also within the range specified in this application, the corrosion area of the side wall of the housing of the obtained cylindrical battery is smaller, which indicates that a problem of corrosion on the inner surface of the side wall of the cylindrical battery provided by this application is mitigated.

A diameter, depth, and density of the pore affect the dyne value of the inner surface of the side wall of the housing, thereby affecting the contact angle between the electrolyte and the inner surface of the side wall. From Examples 2-1 to 2-6 and Examples 2-9 and 2-10, it can be seen that when the diameter, depth, and density of the pore are within the ranges specified in this application, the corrosion area of the inner surface of the side wall of the housing of the obtained cylindrical battery is relatively small, which indicates that a problem of corrosion on the inner surface of the side wall of the cylindrical battery is mitigated.

From Examples 2-1, 2-7, and 2-8, it can be seen that correlation between the corrosion area of the side wall of the housing of the cylindrical battery and the diameter of the cylindrical battery is relatively small. When the diameter of the cylindrical battery is within the range specified in this application, the corrosion area of the inner surface of the side wall of the housing of the obtained cylindrical battery is relatively small, which indicates that a problem of corrosion on the inner surface of the side wall of the cylindrical battery is mitigated.

From Examples 2-1, 2-11, and 2-12, it can be seen that the primer layer in the housing has a certain influence on the dyne value of the inner surface of the side wall of the housing, and the influence is relatively small. When the thickness of the primer layer in the housing is within the range specified in this application, the corrosion area of the side wall of the housing of the obtained cylindrical battery is relatively small, which indicates that a problem of corrosion on the inner surface of the side wall of the cylindrical battery is mitigated.

From Examples 2-1, 2-13, and 2-14, it can be seen that the contact angle between the electrolyte and the inner surface of the side wall varies with the viscosity of the electrolyte, thereby affecting the corrosion area of the side wall of the housing of the cylindrical battery. When the viscosity of the electrolyte is within the range specified in this application, the corrosion area of the side wall of the housing of the obtained cylindrical battery is relatively small, which indicates that a problem of corrosion on the inner surface of the side wall of the cylindrical battery is mitigated.

From Examples 2-1 and 2-15 to 2-17, it can be seen that the ratio S1/S2 of the cross-sectional area of the accommodating cavity to the cross-sectional area of the electrode assembly affects the corrosion area of the side wall of the housing of the cylindrical battery. When S1/S2 is within the range specified in this application, the corrosion area of the side wall of the housing of the obtained cylindrical battery is relatively small, which indicates that a problem of corrosion on the inner surface of the side wall of the cylindrical battery is mitigated.

**Table 3**

| | Quantity of deposited layers | Deposited material | Mass ratio of first functional material to second functional material | H (nm) | H2 (µm) | η (mPa·s) | Dyne value (dyn/cm) | θ (°) | S1/S2 | Corrosion area ratio of inner surface of side wall(%) |
|---|---|---|---|---|---|---|---|---|---|---|
| Example 3-1 | single layer | aluminum oxide | / | 50 | 2 | 2.5 | 50 | 8.1 | 0.97 | 10.32 |
| Example 3-2 | single layer | aluminum oxide | / | 1 | 2 | 2.5 | 40 | 18.9 | 0.97 | 28.41 |
| Example 3-3 | single layer | aluminum oxide | / | 10 | 2 | 2.5 | 43 | 13.7 | 0.97 | 25.67 |
| Example 3-4 | single layer | aluminum oxide | / | 20 | 2 | 2.5 | 48 | 8.6 | 0.97 | 12.84 |
| Example 3-5 | single layer | aluminum oxide | / | 100 | 2 | 2.5 | 42 | 15.2 | 0.97 | 26.36 |
| Example 3-6 | single layer | aluminum oxide | / | 120 | 2 | 2.5 | 40 | 17.6 | 0.97 | 27.98 |
| Example 3-7 | single layer | titanium dioxide | / | 50 | 2 | 2.5 | 50 | 8.3 | 0.97 | 10.73 |
| Example 3-8 | single layer | aluminum oxide+ titanium dioxide | 1:1 | 50 | 2 | 2.5 | 50 | 8.6 | 0.97 | 11.42 |
| Example 3-9 | single layer | aluminum oxide+ titanium dioxide | 0.2:1 | 50 | 2 | 2.5 | 50 | 8.2 | 0.97 | 10.59 |
| Example 3-10 | single layer | aluminum oxide+ titanium dioxide | 5:1 | 50 | 2 | 2.5 | 50 | 8.3 | 0.97 | 10.49 |
| Example 3-11 | double layers | aluminum oxide+ titanium dioxide | 1:1 | 50 | 2 | 2.5 | 50 | 8.2 | 0.97 | 10.54 |
| Example 3-12 | double layers | aluminum oxide+ titanium dioxide | 0.2:1 | 50 | 2 | 2.5 | 50 | 8.4 | 0.97 | 10.78 |
| Example 3-13 | double layers | aluminum oxide+ titanium dioxide | 5:1 | 50 | 2 | 2.5 | 50 | 8.2 | 0.97 | 10.62 |
| Example 3-14 | double layers | aluminum oxide+ titanium dioxide | 1:1 | 1 | 2 | 2.5 | 40 | 18.9 | 0.97 | 28.33 |
| Example 3-15 | double layers | aluminum oxide+titanium dioxide | 1:1 | 10 | 2 | 2.5 | 44 | 13.5 | 0.97 | 25.01 |
| Example 3-16 | double layers | aluminum oxide+ titanium dioxide | 1:1 | 20 | 2 | 2.5 | 48 | 8.4 | 0.97 | 11.59 |
| Example 3-17 | double layers | aluminum oxide+ titanium dioxide | 1:1 | 100 | 2 | 2.5 | 42 | 15.0 | 0.97 | 26.12 |
| Example 3-18 | double layers | aluminum oxide+ titanium dioxide | 1:1 | 120 | 2 | 2.5 | 40 | 17.9 | 0.97 | 28.29 |
| Example 3-19 | single layer | aluminum oxide | / | 50 | 1 | 2.5 | 50 | 8.1 | 0.97 | 10.50 |
| Example 3-20 | single layer | aluminum oxide | / | 50 | 10 | 2.5 | 50 | 8.1 | 0.97 | 10.27 |
| Example 3-21 | single layer | aluminum oxide | / | 50 | 2 | 3 | 50 | 8.2 | 0.97 | 10.58 |
| Example 3-22 | single layer | aluminum oxide | / | 50 | 2 | 5 | 50 | 8.3 | 0.97 | 10.71 |
| Example 3-23 | single layer | aluminum oxide | / | 50 | 2 | 2.5 | 50 | 8.1 | 0.96 | 12.88 |
| Example 3-24 | single layer | aluminum oxide | / | 50 | 2 | 2.5 | 50 | 8.1 | 0.98 | 9.50 |
| Example 3-25 | single layer | aluminum oxide | / | 50 | 2 | 2.5 | 50 | 8.1 | 0.95 | 14.02 |
| Comparative Example 1 | / | / | / | / | 2 | 2.5 | 36 | 35.0 | 0.97 | 40.12 |

| | | | | | | | | | | |
|---|---|---|---|---|---|---|---|---|---|---|
| Note: "/" in Table 3 indicates that there are no relevant parameters. | | | | | | | | | | |

From Examples 3-1 to 3-25 and Comparative Example 1, it can be seen that for a housing obtained by forming a functional layer on the inner surface of the side wall of the housing via atomic layer deposition treatment, regardless of whether the functional layer has a single layer or double layers, when a dyne value of the inner surface of the side wall of the housing is within the range specified in this application and the contact angle between the electrolyte and the inner surface of the side wall is also within the range specified in this application, the corrosion area of the side wall of the housing of the obtained cylindrical battery is smaller, which indicates that a problem of corrosion on the inner surface of the side wall of the cylindrical battery provided by this application is mitigated.

A quantity of the functional layers, a type of the functional material, and a mass ratio of different functional materials affect the dyne value of the inner surface of the side wall of the housing, thereby affecting the contact angle between the electrolyte and the inner surface of the side wall. From Examples 3-1 to 3-18, it can be seen that when the above parameters are within the range specified in this application, the corrosion area of the inner surface of the side wall of the housing of the obtained cylindrical battery is relatively small, which indicates that a problem of corrosion on the inner surface of the side wall of the cylindrical battery is mitigated. From Examples 3-1 and 3-7 to 3-13, it can be seen that the type of the functional material and the mass ratio of different functional materials have a certain influence on the dyne value of the inner surface of the side wall of the housing, but the influence is relatively small. A corrosion area of the inner surface of the side wall of the housing of the cylindrical battery obtained in Example 3-6 is approximate to that in Example 3-2, but the thickness of the functional layer in Example 3-2 is much smaller than that in Example 3-6, that is, while mitigating a problem of corrosion on the inner surface of the side wall of the cylindrical battery, Example 3-2 may better take into account a volumetric energy density and mass energy density of the cylindrical battery when compared with Example 3-6. The corrosion area of the inner surface of the side wall of the housing of the cylindrical battery obtained in Example 3-14 is approximate to that in Example 3-18, but the thickness of the functional layer in Example 3-14 is much smaller than that in Example 3-18, that is, while mitigating a problem of corrosion on the inner surface of the side wall of the cylindrical battery, Example 3-14 can better take into account the volumetric energy density and mass energy density of the cylindrical battery compared with Example 3-18.

From Examples 3-1 and 3-19 to 3-20, it can be seen that the primer layer in the housing has a certain influence on the dyne value of the inner surface of the side wall of the housing, and the influence is relatively small. When the thickness of the primer layer in the housing is within the range specified in this application, the corrosion area of the side wall of the housing of the obtained cylindrical battery is relatively small, which indicates that a problem of corrosion on the inner surface of the side wall of the cylindrical battery is mitigated.

From Examples 3-1 and 3-21 to 3-22, it can be seen that the contact angle between the electrolyte and the inner surface of the side wall varies with the viscosity of the electrolyte, thereby affecting the corrosion area of the side wall of the housing of the cylindrical battery. When the viscosity of the electrolyte is within the range specified in this application, the corrosion area of the side wall of the housing of the obtained cylindrical battery is relatively small, which indicates that a problem of corrosion on the inner surface of the side wall of the cylindrical battery is mitigated.

From Examples 3-1 and 3-23 to 3-25, it can be seen that the ratio S1/S2 of the cross-sectional area of the accommodating cavity to the cross-sectional area of the electrode assembly affects the corrosion area of the side wall of the housing of the cylindrical battery. When S1/S2 is within the range specified in this application, the corrosion area of the side wall of the housing of the obtained cylindrical battery is relatively small, which indicates that a problem of corrosion on the inner surface of the side wall of the cylindrical battery is mitigated.

It should be noted that in this specification, relational terms such as first and second are merely used to distinguish one entity or operation from another entity or operation, and do not necessarily require or imply that there is any such actual relationship or order between these entities or operations. Moreover, the terms "include", "comprise", or any other variants thereof are intended to cover non-exclusive inclusion, so that a process, method or article including a series of elements includes not only those elements, but also other elements not explicitly listed, or includes elements inherent to such process, method or article.

An element connected to the term "one of" or another similar term refers to any one of the listed elements. For example, "one of A or B" refers to only A or only B. For another example, "one of A, B and C" refers to only A, only B or only C. An element connected to the term "at least one of", "at least one of", "at least one of" or another similar term refers to any combination of the listed elements. For example, "at least one of A or B" refers to only A, only B, or A and B. For another example, "at least one of A, B or C" refers to only A, only B, only C, only A and B, only A and C, only B and C, or A and B and C.

The above are merely preferred embodiments of this application and are not intended to limit this application. Any modifications, equivalent replacements, improvements, or the like made within the spirit and principles of this application shall fall within the protection scope of this application.

## Claims

1. A cylindrical battery, comprising:
a housing, comprising a side wall;
an electrode assembly, accommodated in an accommodating cavity defined by the housing; and
an electrolyte, accommodated in the accommodating cavity;
wherein a dyne value of an inner surface of the side wall facing the electrode assembly is greater than or equal to 40 dyn/cm, and a contact angle θ between the electrolyte and the inner surface ranges from 0° to 19°.

2. The cylindrical battery according to claim 1, wherein the dyne value of the inner surface ranges from 40 dyn/cm to 55 dyn/cm, and/or, 0°≤θ≤15°.

3. The cylindrical battery according to claim 1 or 2, wherein in a plane perpendicular to a winding axis of the electrode assembly, a cross-sectional area of the accommodating cavity is S1, and a cross-sectional area of the electrode assembly is S2, wherein 0.96≤S1/S2≤0.98.

4. The cylindrical battery according to any one of claims 1 to 3, wherein at 25°C, a viscosity η of the electrolyte ranges from 2 mPa·s to 5 mPa·s.

5. The cylindrical battery according to any one of claims 1 to 4, wherein a roughness Ra of the inner surface ranges from 0.5 µm to 2.4 µm.

6. The cylindrical battery according to any one of claims 1 to 4, wherein the inner surface is provided with a plurality of pores, a pore diameter d of a single pore ranges from 1 µm to 5 µm, and a depth h thereof ranges from 5 µm to 20 µm.

7. The cylindrical battery according to claim 6, wherein a density of the pores is N, and the cylindrical battery satisfies one of the following features:
(1) 5000 pcs/mm²≤N≤20000 pcs/mm², 1 µm≤d≤2 µm, and 5 µm≤h<10 µm;
(2) 5000 pcs/mm²<N≤15000 pcs/mm², 2 µm<d≤3 µm, and 10 µm≤h≤15 µm; or
(3) 5000 pcs/mm²<N≤10000 pcs/mm², 3 µm<d≤5 µm, and 15 µm<h≤20 µm.

8. The cylindrical battery according to claim 6 or 7, wherein a diameter D of the cylindrical battery ranges from 17 mm to 65 mm.

9. The cylindrical battery according to any one of claims 1 to 8, wherein the housing comprises a substrate layer and a primer layer.

10. The cylindrical battery according to any one of claims 1 to 4, wherein the housing comprises a substrate layer, a primer layer, and a functional layer, the primer layer is located between the substrate layer and the functional layer, the functional layer faces the electrode assembly, and a thickness H of the functional layer ranges from 1 nm to 100 nm; optionally, 10 nm≤H≤50 nm; and
the functional layer comprises a functional material, and the functional material comprises at least one of aluminum oxide, titanium dioxide, zinc oxide, titanium nitride, lithium fluoride or titanium trioxide.

11. The cylindrical battery according to claim 10, wherein the functional layer comprises a first material layer and a second material layer, the first material layer comprises a first functional material, the second material layer comprises a second functional material, and a mass ratio of the first functional material to the second functional material is (0.2 to 5):1; and
the first functional material and the second functional material each independently comprise at least one of aluminum oxide, titanium dioxide, zinc oxide, titanium nitride, lithium fluoride or titanium trioxide.

12. The cylindrical battery according to any one of claims 9 to 11, wherein
a thickness H1 of the substrate layer ranges from 100 µm to 1000 µm, and a material of the substrate layer comprises at least one of steel, aluminum, or aluminum alloy; and a thickness H2 of the primer layer ranges from 1 µm to 10 µm, and a material of the primer layer comprises at least one of nickel, nickel alloy, or inorganic ceramic particles;
and/or, $4.5 ° \leq θ \leq 15 ° .$

13. A preparation method of the cylindrical battery according to any one of claims 1 to 12, comprising the following steps:
performing functionalization treatment on a substrate housing to obtain the housing, wherein the functionalization treatment comprises one of plasma activation, laser etching, or atomic layer deposition.

14. The preparation method according to claim 13, wherein
the functionalization treatment is the plasma activation, an atmosphere of the plasma activation is a mixed gas of an inert gas and a reactive gas, and a volume ratio of the inert gas to the reactive gas is (1 to 4):1;
wherein the inert gas comprises at least one of argon or helium, and the reactive gas comprises at least one of oxygen, hydrogen, or nitrogen.

15. An electronic device, comprising the cylindrical battery according to any one of claims 1 to 12 or the cylindrical battery prepared according to the preparation method according to any one of claims 13 to 14.
